(19) Europäisches Patentamt
European Patent Office
Office européen des brevets

(11) **EP 3 780 529 B1**

## (12) FASCICULE DE BREVET EUROPEEN

(45) Date de publication et mention de la délivrance du brevet:
**27.09.2023 Bulletin 2023/39**

(21) Numéro de dépôt: **20190632.8**

(22) Date de dépôt: **12.08.2020**

(51) Classification Internationale des Brevets (IPC):
*H04L 27/10* *(2006.01)*

(52) Classification Coopérative des Brevets (CPC):
**H04L 27/12; H04L 1/0016; H04L 1/0042; H04L 1/005; H04L 1/0066;** H04L 67/12; H04W 4/70; Y02D 30/70

(54) **DISPOSITIF ET PROCÉDÉ POUR LA SIGNALISATION DE COMMUNICATIONS À TRAVERS UN SPECTRE FRAGMENTÉ**

VORRICHTUNG UND VERFAHREN FÜR DIE SIGNALISIERUNG VON KOMMUNIKATIONEN ÜBER EIN FRAGMENTIERTES SPEKTRUM

DEVICE AND METHOD FOR COMMUNICATIONS SIGNALLING THROUGH A FRAGMENTED SPECTRUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.08.2019 FR 1909205**

(43) Date de publication de la demande:
**17.02.2021 Bulletin 2021/07**

(73) Titulaire: **Commissariat à l'énergie atomique et aux énergies alternatives**
**75015 Paris (FR)**

(72) Inventeurs:
• **DEHMAS, François**
  **38054 GRENOBLE CEDEX 09 (FR)**
• **BERG, Vincent**
  **38054 GRENOBLE CEDEX 09 (FR)**
• **MANNONI, Valerian**
  **38054 GRENOBLE CEDEX 09 (FR)**

(74) Mandataire: **Brevalex**
**Tour Trinity**
**1 B Place de la Défense**
**92400 Courbevoie (FR)**

(56) Documents cités:
• **RUI YUN ET AL: "Carrier aggregation for LTE-advanced: uplink multiple access and transmission enhancement features", IEEE WIRELESS COMMUNICATIONS, COORDINATED SCIENCE LABORATORY; DEPT. ELECTRICAL AND COMPUTER ENGINEERING; UNIVERSITY OF ILLINOIS AT URBANA-CHAMPAIGN, US, vol. 20, no. 4, 1 août 2013 (2013-08-01), XP011526510, ISSN: 1536-1284, DOI: 10.1109/MWC.2013.6590056 [extrait le 2013-09-06]**
• **DEHMAS FRANCOIS ET AL: "Turbo-Fsk, a Physical Layer for LPWA: Synchronization and Channel Estimation", 2018 EUROPEAN CONFERENCE ON NETWORKS AND COMMUNICATIONS (EUCNC), IEEE, 18 juin 2018 (2018-06-18), pages 1-5, XP033389586, DOI: 10.1109/EUCNC.2018.8442497 [extrait le 2018-08-20]**
• **MANNONI VALERIAN ET AL: "A Flexible Physical Layer for LPWA Applications: Simulations and Field Trials", 2019 IEEE 5TH WORLD FORUM ON INTERNET OF THINGS (WF-IOT), IEEE, 15 avril 2019 (2019-04-15), pages 160-164, XP033578723, DOI: 10.1109/WF-IOT.2019.8767328 [extrait le 2019-07-19]**

EP 3 780 529 B1

• GUIZAR ARTURO ET AL: "Massive Deployment Evaluation of Adaptive LPWA Networks Using Turbo-FSK", 2018 14TH INTERNATIONAL CONFERENCE ON WIRELESS AND MOBILE COMPUTING, NETWORKING AND COMMUNICATIONS (WIMOB), IEEE, 15 octobre 2018 (2018-10-15), pages 1-8, XP033476433, DOI: 10.1109/WIMOB.2018.8589092 [extrait le 2018-12-26]

**Description**

**DOMAINE TECHNIQUE**

Le domaine de l'invention est celui des communications machine à machine ou M2M dans le contexte de l'Internet des Objets ou IoT (*Internet of Things*) et plus particulièrement celui des communications radio dans les réseaux LPWA (*Low Power Wide Area*) caractérisés par une couverture (portée) importante tout en ayant une consommation énergétique faible.

**TECHNIQUE ANTÉRIEURE**

Un des enjeux des systèmes de communications longue portée est leur consommation énergétique, notamment celle des émetteurs. Une enveloppe constante à l'émetteur permet d'optimiser l'efficacité énergétique de l'amplificateur d'émission et ainsi de maintenir la puissance consommée par l'émetteur à des niveaux très faibles.

Un exemple de schéma de modulation présentant une enveloppe constante est le schéma Turbo-FSK qui combine une modulation FSK (modulation par déplacement de fréquence) avec un ensemble de codes convolutifs concaténés en parallèle. L'article de F. Dehmas, V. Mannoni and V. Berg, "Turbo-FSK, a Physical Layer for LPWA: Synchronization and Channel Estimation," 2018 European Conference on Networks and Communications (EuCNC), Ljubljana, Slovenia, 2018, pp. 1-5, décrit une synchronisation et une estimation de canal adaptées à ce schéma Turbo-FSK. La signalisation (préambule et pilotes) est pour cela basée sur des séquences d'amplitude constante et d'autocorrélation nulle (séquences CAZAC pour « Constant Amplitude Zero Autocorrelation »), en l'occurrence des séquences de Zadoff-Chu modifiées.

Cet article ne considère pas un spectre fragmenté, à savoir un spectre de fréquences divisé en une pluralité de fragments de spectre couvrant chacun une bande de fréquences, les bandes de fréquences étant disjointes les unes des autres. Or l'utilisation d'un tel spectre fragmenté peut s'avérer utile notamment dans les cas suivants :

- pour réaliser une utilisation opportuniste de trous dans un spectre encombré ;
- pour augmenter le débit en venant augmenter la largeur de bande utilisée, ce qui est moins contraignant si la bande peut être fragmentée ;
- pour obtenir un système avec une meilleure portée et/ou un meilleur débit en venant apporter une diversité fréquentielle, l'utilisation de plusieurs bandes non contiguës permettant de diminuer la probabilité d'être dans un trou d'évanouissement (*fading*), notamment pour les systèmes radio qui comme le LPWA accèdent au spectre de manière sporadique ;
- pour venir exploiter des bandes licenciées et non licenciées.

La transposition de la technique exposée dans l'article précédemment cité dans un système de communication exploitant un spectre fragmenté consisterait à additionner plusieurs séquences de signalisation, ces séquences étant associées à des fréquences différentes pour couvrir les différents fragments de spectre. Une telle solution ne serait cependant pas satisfaisante car elle s'accompagnerait d'une perte d'efficacité énergétique du fait d'un rapport puissance de crête/puissance moyenne (PAPR pour *Peak to Average Power Ratio*) fortement supérieur à 0 dB.

Une autre solution pourrait consister à utiliser sur un spectre fragmenté une forme d'onde présentant un PAPR de 0 dB (par exemple des symboles Turbo-FSK dans l'exemple considéré). Mais les propriétés d'autocorrélation de tels symboles sont médiocres, ce qui viendrait impacter la qualité de la synchronisation temporelle.

On connaît de l'article de Y. Rui, P. Cheng, M. Li, Q. T. Zhang, and M. Guizani, "Carrier aggregation for Ite-advanced: uplink multiple access and transmission enhancement features," IEEE Wireless Communications, vol. Vol. 20, No. 4, pp. 101-108, 2013, des schémas d'accès permettant d'exploiter un spectre fragmenté et des techniques de réduction du PAPR. Mais dans cet article, l'enveloppe du signal n'est pas constante et le PAPR reste donc très supérieur à 0 dB même avec l'utilisation des techniques de réduction du PAPR. De ce fait, l'efficacité énergétique de l'amplificateur d'émission n'est pas optimisée et donc la consommation énergétique importante de l'émetteur.

**EXPOSÉ DE L'INVENTION**

L'invention a pour objectif de proposer une méthode de signalisation pour un lien radio dont le support spectral est fragmenté, méthode qui garantisse à la fois une enveloppe constante à l'émetteur pour optimiser l'efficacité énergétique et des propriétés spectrales de la forme d'onde à laquelle cette signalisation s'applique préservées pour garantir la précision de la synchronisation ou de l'estimation de canal.

L'invention est définie par les caractéristiques des revendications indépendantes. Certains aspects préférés sont présentés dans les revendications dépendantes.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

La Figure 1 est un schéma d'un spectre fragmenté ;
La Figure 2 représente une trame de données porteuse de séquences de signalisation ;
La Figure 3 est un schéma du spectre fréquentiel d'une séquence de signalisation selon l'invention adaptée à un spectre fragmenté comprenant deux bandes disjointes ;
La Figure 4 représente à titre de comparaison la fonction d'autocorrélation d'une séquence de signalisation selon l'invention adaptée à un spectre fragmenté comprenant deux bandes disjointes et la fonction d'autocorrélation d'une séquence de signalisation divulguée dans l'article précité de F. Dehmas et al ;
La Figure 5 est un schéma du spectre fréquentiel d'une séquence de signalisation selon l'invention adaptée à un spectre fragmenté comprenant quatre bandes disjointes ;
La Figure 6 représente à titre de comparaison la fonction d'autocorrélation d'une séquence de signalisation selon l'invention adaptée à un spectre fragmenté comprenant quatre bandes disjointes et la fonction d'autocorrélation d'une séquence de signalisation divulguée dans l'article précité de F. Dehmas et al ;
La Figure 7 est un schéma d'une unité d'un dispositif d'émission de données conforme à l'invention configurée pour mettre en oeuvre une modulation Turbo-FSK ;
La Figure 8 est un schéma d'une unité d'un dispositif de réception de données configurée pour mettre en oeuvre une démodulation Turbo-FSK ;
La Figure 9 compare le taux d'erreur paquet en fonction du rapport signal à bruit de la modulation Turbo-FSK selon que le spectre est fragmenté ou non fragmenté ;
La Figure 10 compare la forme spectrale de la modulation Turbo-FSK avec celle d'une séquence de signalisation selon l'invention adaptée à un spectre fragmenté comprenant deux bandes disjointes.

## DESCRIPTION DÉTAILLÉE

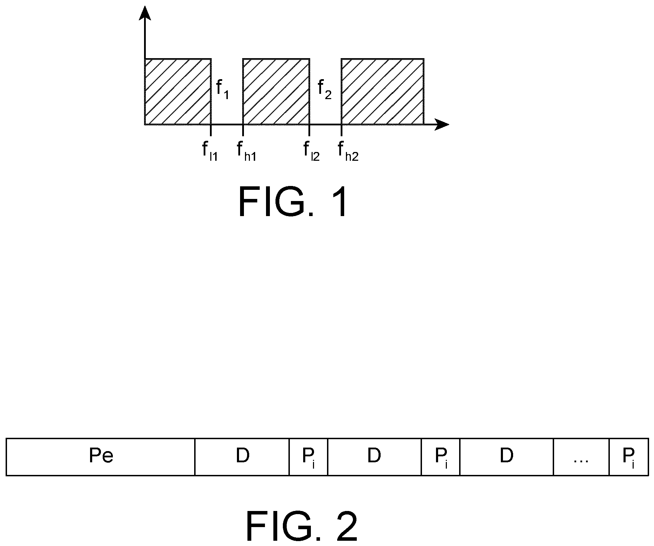

L'invention porte sur un dispositif d'émission de données sur un spectre fragmenté, à savoir un spectre de fréquences divisé en une pluralité $N_f$ de fragments de spectre couvrant chacun une bande de fréquences, les bandes de fréquences étant disjointes les unes des autres. On a représenté sur la figure 1 le cas d'un spectre fragmenté présentant deux fragments de spectre $f_1$, $f_2$ couvrant les bandes de fréquence délimitées en fréquence par $f_{l1}$, $f_{h1}$ et $f_{l2}$, $f_{h2}$ respectivement avec $fl_2 > f_{h1}$.

Le dispositif selon l'invention comprend un générateur de paquets configuré pour générer un paquet de données comprenant une charge utile et au moins une occurrence d'une séquence de signalisation. Comme illustré par la figure 2, un paquet ainsi généré est composé d'un préambule Pe et de pilotes Pi régulièrement distribués dans les données D (i.e. la charge utile). Le préambule Pe est utilisé pour permettre la synchronisation (tant temporelle que fréquentielle) et les pilotes sont utilisés pour permettre l'estimation de canal. Le préambule Pe et/ou chacun des pilotes Pi comprend au moins une occurrence de la séquence de signalisation. Dans un mode de réalisation, le préambule Pe comprend plusieurs occurrences de la séquence de signalisation, par exemple des occurrences successives de la séquence de signalisation.

Le générateur de paquets du dispositif selon l'invention est plus particulièrement configuré pour générer un paquet dont l'au moins une séquence de signalisation S est une séquence à enveloppe constante. Cette séquence à enveloppe constante S comprend N symboles complexes, chacun noté S[n] avec n un entier compris entre 0 et N-1. Les N symboles complexes se répartissent en une pluralité $N_f$ d'ensemble de symboles complexes, chacun de ces ensembles étant associé à l'un des fragments de spectre et comprenant $N/N_f$ symboles complexes.

La séquence à enveloppe constante S comprend plus particulièrement, pour chaque ensemble de symboles complexes, un terme de mise à l'échelle de la bande de fréquences couverte par le fragment de spectre associé à cet ensemble et un terme de transposition spectrale dans la bande de fréquences couverte par le fragment de spectre associé à cet ensemble.

Soit un spectre fragmenté constitué de $N_f$ fragments de spectre, où chaque fragment n°i, avec $0 \leq i \leq N_f - 1$, couvre une bande de fréquences délimitée par une fréquence basse $f_{li}$ et par une fréquence haute $f_{hi}$ et présente une largeur $\Delta f_i = f_{li} - f_{hi}$. Le générateur de paquets associe au fragment de spectre n°i du spectre fragmenté un ensemble de $N/N_f$ symboles où chaque symbole comprend un terme de mise à l'échelle de la bande de fréquences $\Delta f_i$ couverte par le fragment de spectre correspondant et par un terme de transposition spectrale dans la bande de fréquences $[f_{li} ; f_{hi}]$ couverte par le fragment de spectre correspondant.

Dans un mode de réalisation possible, pour $\frac{iN}{N_f} \leq n < \frac{(i+1)N}{N_f}$, on définit un ensemble de symboles complexes associé au fragment n°i et pour lequel $S[n] = Sca(\Delta f_i) * TF(f_{li})$ où $Sca(\Delta f_i)$ est un terme de mise à l'échelle de la bande de fréquences $\Delta f_i$ qui permet de régulièrement distribuer les symboles sur cette bande et $TF(f_{li})$ est un terme de transposition spectrale dans la bande de fréquences $[f_{li}; f_{hi}]$ qui permet aux symboles d'être distribués dans cette bande.

Partant d'une séquence CAZAC, par exemple une séquence de Zadoff-Chu ou une séquence de Björck, le terme $Sca(\Delta f_i)$ permet, par interpolation de phase, d'avoir une séquence CAZAC modifiée qui occupe la bonne largeur de bande et qui est d'amplitude constante. Le terme $TF(f_{li})$ vient quant à lui translater cette séquence CAZAC modifiée dans la bonne bande.

Pour garantir une enveloppe constante, on peut par exemple choisir

$$Sca(\Delta f_i) = \exp\left(\frac{j2\pi\left(n-\frac{iN}{N_f}\right)^2 \Delta f_i}{N f_{ech}}\right) \text{ et } TF(f_{li}) = \exp(j2\pi v_{li}n),$$

avec

$f_{ech}$ la fréquence d'échantillonnage des données (i.e. la fréquence des échantillons du signal numérique) et $v_{li}$ la fréquence réduite $f_{li}/f_{ech}$. Dans cet exemple, la séquence de signalisation S est une séquence de Zadoff-Chu modifiée qui s'exprime selon :

$$S[n] =$$

$$\begin{cases} \exp\left(\frac{j2\pi n^2 \Delta f_0}{N f_{ech}}\right) \times \exp(j2\pi v_{l0}n) & \text{pour } n < \frac{N}{N_f} \\ \qquad\qquad \vdots & \qquad \vdots \\ \exp\left(\frac{j2\pi\left(n-\frac{iN}{N_f}\right)^2 \Delta f_i}{N f_{ech}}\right) \times \exp(j2\pi v_{li}n) & \text{pour } \frac{iN}{N_f} \leq n < \frac{(i+1)N}{N_f} \\ \qquad\qquad \vdots & \qquad \vdots \\ \exp\left(\frac{j2\pi\left(n-(N_f-1)\times\frac{N}{N_f}\right)^2 \Delta f_{N_f-1}}{N f_{ech}}\right) \times \exp\left(j2\pi v_{lN_f-1}n\right) & \text{pour } n \geq \left(N_f - 1\right) \times \frac{N}{N_f} \end{cases}$$

Reprenant l'exemple de la figure 1 avec un spectre fragmenté constitué de deux bandes disjointes, avec

$v_{l1} = \frac{f_{l1}}{f_{ech}}$, $v_{l2} = \frac{f_{l2}}{f_{ech}}$ les fréquences réduites, la séquence de signalisation s'exprime selon :

$$S[n] = \begin{cases} \exp\left(\frac{j2\pi n^2 \Delta f_1}{N f_{ech}}\right) \times \exp(j2\pi v_{l1}n) & \text{pour } n < \frac{N}{2} \\ \exp\left(\frac{j2\pi\left(n-\frac{N}{2}\right)^2 \Delta f_2}{N f_{ech}}\right) \times \exp(j2\pi v_{l2}n) & \text{pour } n \geq \frac{N}{2} \end{cases}$$

Une telle séquence a une enveloppe constante ($|S[n]| = 1$) et le PAPR est donc de 0 dB. Cette séquence peut ainsi être utilisée avec des formes d'onde à enveloppe constante en conservant l'efficacité énergétique de l'amplificateur de puissance de l'émetteur.

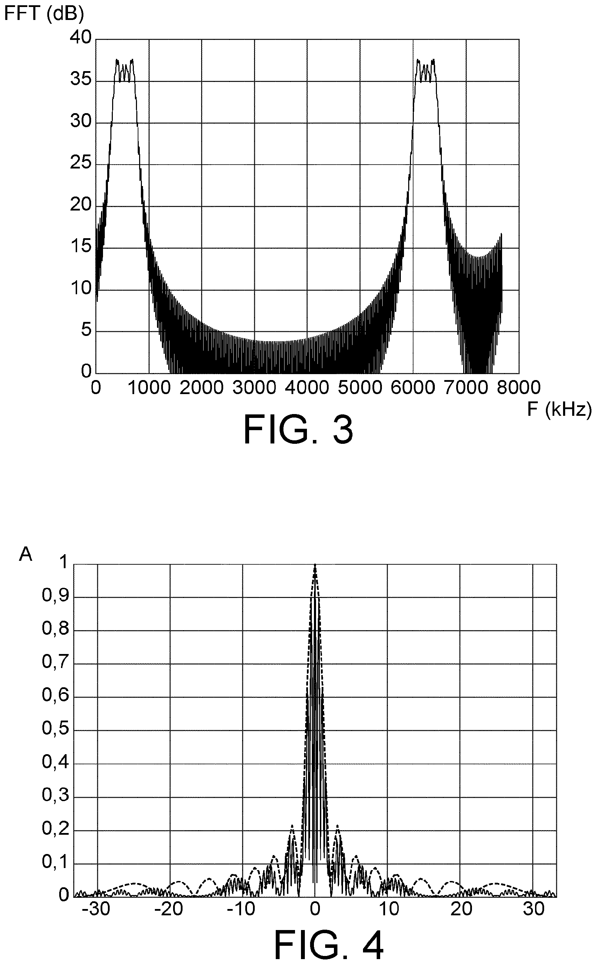

On a représenté sur la figure 3 le spectre fréquentiel (résultat d'une transformée de Fourier rapide, FFT, en dB selon la fréquence, F, en kHz) de cette séquence de signalisation avec $f_{ech}$ = 15.36 MHz, $v_{l1}$, = 300 kHz, $v_{l2}$ = 6000 kHz, $N$ = 1024 et une même largeur de bandes pour les deux bandes $\Delta f_1 = \Delta f_2$ = 480 kHz. On constate que cette séquence couvre bien les deux bandes désirées.

On a par ailleurs représenté sur la figure 4 la fonction d'autocorrélation A de cette séquence de signalisation selon l'invention (en traits pleins) et celle de la séquence de signalisation adaptée à une bande unique comme divulguée dans l'article précité de F. Dehmas et al. (en traits pointillés). On constate que les propriétés d'autocorrélation ne sont pas dégradées par rapport au cas de la bande unique de l'état de l'art: la largeur du pic principal est conservée et les pics secondaires sont de même niveau pour une largeur de bande totale identique.

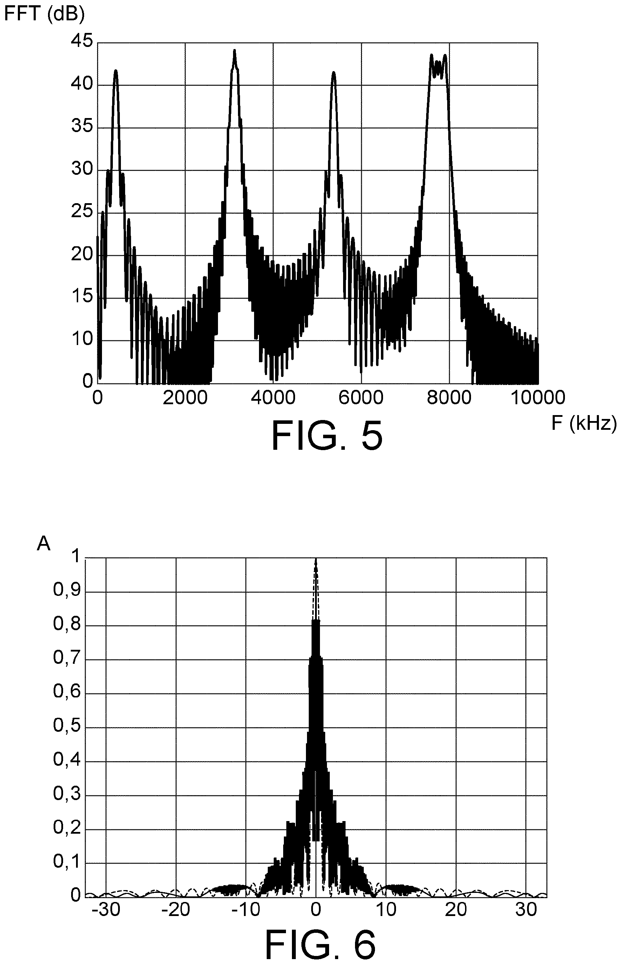

Les figures 5 et 6 illustrent que ces propriétés sont conservées dans le cas d'une séquence de signalisation selon l'invention adaptée à un spectre fragmenté constitué de quatre fragments de spectre. On a ainsi représenté sur la figure 5 le spectre fréquentiel (résultat d'une transformée de Fourier rapide, FFT, en dB selon la fréquence, F, en kHz) d'une telle séquence de signalisation avec $\Delta f_1 = \Delta f_3$ = 120 kHz, $\Delta f_2$= 240 kHz, $\Delta f_4$ = 480 kHz, $f_{ech}$ = 15.36 MHz, $v_{l1}$ = 300 kHz, $v_{l2}$ = 3000 kHz, $v_{l3}$ = 5250 kHz, $v_{l4}$ = 7500 kHz et $N$ = 1024. Cette séquence couvre bien les bandes désirées. On a par ailleurs représenté à titre de comparaison sur la figure 6 la fonction d'autocorrélation A de cette séquence de signalisation (en traits pleins) et la fonction d'autocorrélation de la séquence de signalisation adaptée à une bande unique comme divulguée dans l'article précité de F. Dehmas et al (en traits pointillés). On constate que les propriétés d'autocorrélation sont similaires au cas du spectre non fragmenté pour un même largeur de bande totale.

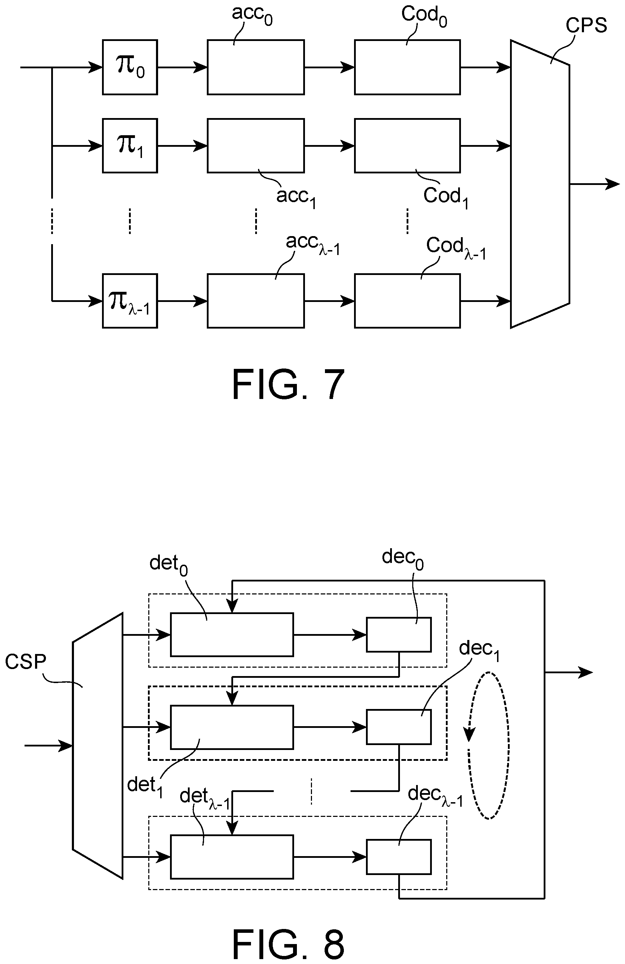

Dans un mode de réalisation privilégié, et comme représenté en figure 7, le dispositif d'émission selon l'invention comprend un modulateur apte à mettre en oeuvre la modulation Turbo-FSK. Ce modulateur est composé de λ étages, chacun codant une version entrelacée différemment de $Q$ bits d'information. A chaque étage, les Q bits d'information sont entrelacés par un entrelaceur $\pi_0$, $\pi_1$,..., $\pi_{\lambda-1}$ puis groupés en blocs de q bits, chaque bloc étant séquentiellement encodé en utilisant un accumulateur de parité $acc_0$, $acc_1$,..., $acc_{\lambda-1}$. Les $q$ + 1 bits résultants sont associés à un mot de code de l'alphabet coplanaire FSK au moyen d'un codeur coda, $cod_1$,..., $cod_{\lambda-1}$, c'est-à-dire associés à une modulation de phase d'ordre $N_L$ ($N_L$-PSK) et une modulation de fréquence d'ordre $N_\perp$ ($N_\perp$-FSK), avec $q$ + 1 = $\log_2(N_L N_\perp)$). Grâce à l'accumulateur, chaque symbole coplanaire FSK est relié à son prédécesseur. Un convertisseur de parallèle en série CPS termine la chaîne pour transmettre les symboles dans le canal.

On a représenté sur la figure 8, un dispositif de réception de données configuré pour mettre en oeuvre une démodulation Turbo-FSK. Ce dispositif comprend un convertisseur série-parallèle CSP pour reconstruire les λ étages émis. Un détecteur $det_0$, $det_1$, ..., $det_{\lambda-1}$ réalise l'estimation des probabilités de chaque mot code possible. Ces probabilités sont fournies à un décodeur deca, $dec_1$, ..., $dec_{\lambda-1}$ qui les utilise comme observations, les sorties des autres décodeurs étant utilisées comme information a priori. Un algorithme BCJR modifié, tel que décrit par L. Bahl, J. Cocke, F. Jelinek, and J. Raviv, "Optimal decoding of linear codes for minimizing symbol error rate (corresp.)," IEEE Trans. on Information Theory, vol. 20, no. 2, pp. 284-287, Mar 1974, est utilisé pour obtenir les probabilités a posteriori des bits d'informations.

Ce dispositif de réception comporte par ailleurs une unité de synchronisation et une unité d'estimation de canal. L'une au moins de ces unités est configurée pour exploiter la séquence de signalisation précédemment décrite, celle-ci étant connue du dispositif de réception. L'unité de synchronisation peut ainsi être configurée pour corréler un signal reçu avec la séquence de signalisation connue. Et l'unité d'estimation de canal peut ainsi être configurée pour réaliser une déconvolution d'un signal reçu par la séquence de signalisation connue.

On prend dans ce qui suit l'exemple d'un spectre fragmenté comprenant deux fragments, l'un couvrant la bande 300 kHz à 765 kHZ et l'autre couvrant la bande 6000 kHz à 6465 kHz (ces deux bandes sont données en bande de base, la bande RF étant une translation de ces bandes vers la bande RF utilisée). On prévoit une modulation Turbo-FSK caractérisée par $N_\perp$ = 64, avec 32 fréquences possibles dans la première bande et 32 fréquences possibles dans la seconde bande, $N_L$ = 16 et λ=4. Des simulations ont été réalisées sur un canal de propagation « Extended Pedestrian A » (EPA) utilisé par le 3GPP. Il correspond à un environnement résidentiel avec des portées de l'ordre du kilomètre. Les paquets sont constitués de 1008 bits utiles.

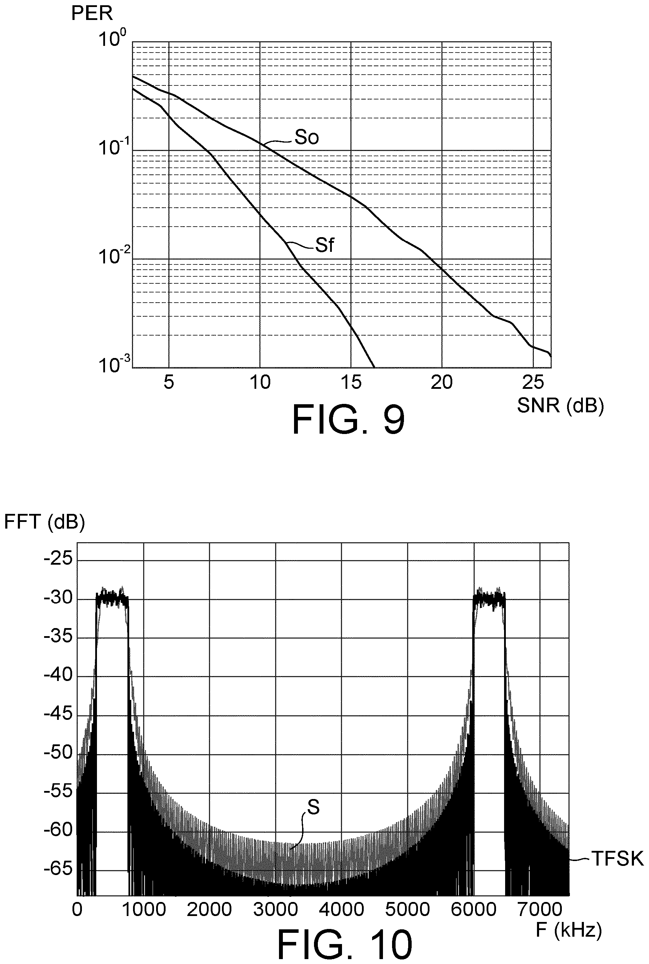

La figure 9 compare le taux d'erreur paquet PER en fonction du rapport signal à bruit SNR de la modulation Turbo-FSK selon que le spectre est fragmenté (courbe Sf) ou non fragmenté (courbe S0). Cette figure 9 illustre le gain de diversité fréquentielle obtenu en utilisant un spectre fragmenté. On contraste notamment un gain de 7 dB pour un taux d'erreur paquet de 1%.

La figure 10 compare la forme spectrale (FFT, en dB) de la modulation Turbo-FSK (courbe TFSK) avec celle d'une séquence de signalisation selon l'invention adaptée au spectre fragmenté constitué des deux bandes disjointes (courbe S). On constate que ces formes spectrales sont similaires aussi bien dans les bandes utilisés (où les amplitudes sont très proches) qu'en dehors des bandes. Hors bande, la différence est au maximum de 6 dB pour un trou d'environ 38 dB. La réjection de la séquence, certes un peu moins bonne que celle de la modulation, reste néanmoins à des niveaux comparables.

L'invention propose ainsi de construire un préambule en utilisant la séquence de signalisation décrite ci-dessus, cette séquence pouvant être répétée de manière à améliorer les performances de synchronisation tout en conservant ses bonnes propriétés d'autocorrélation et de PAPR. Cette séquence peut de la même manière être utilisée comme pilote en la répétant à différents endroits du paquet. L'invention permet alors d'obtenir une couche physique ayant une enveloppe constante (PAPR = 0 dB), sur les données comme sur la partie signalisation (préambule et pilotes). Comme les propriétés d'autocorrélation sont similaires au cas du spectre non-fragmenté (cf. figures 4 et 6), les performances de synchronisation sont similaires dans les cas spectre fragmenté ou spectre non fragmenté. Il en est de même pour l'estimation de canal grâce à une amplitude spectrale quasiment plate dans les bandes utiles.

L'invention n'est pas limitée au dispositif d'émission de données, mais concerne également un dispositif de réception de données depuis un spectre fragmenté, ledit dispositif comprenant une unité de synchronisation et une unité d'estimation de canal, l'une au moins desdites unités étant configurée pour exploiter la séquence de signalisation précédemment décrite. L'invention porte également sur un procédé d'émission de données comprenant la génération de paquets portant cette séquence de signalisation ainsi qu'un procédé de réception de donnée comprenant une étape de synchronisation et une étape d'estimation de canal, l'une au moins desdites étapes exploitant cette séquence de signalisation.

## Revendications

1. Dispositif d'émission de données sur un spectre de fréquences divisé en une pluralité $N_f$ de fragments de spectre $(f_1, f_2)$ couvrant chacun une bande de fréquences, les bandes de fréquences étant disjointes les unes des autres, **caractérisé en ce qu'**il comprend un générateur de paquets configuré pour générer un paquet de données comprenant une charge utile et au moins une occurrence d'une séquence de signalisation à enveloppe constante, ladite séquence comprend un nombre de N symboles complexes et consiste en une pluralité d'ensembles de symboles complexes chacun associé à l'un des fragments de spectre, chaque ensemble comprenant N/Nf symboles complexes et chaque symbole complexe d'un ensemble comprend un terme de mise à l'échelle de la bande de fréquences couverte par le fragment de spectre associé à cet ensemble et un terme de transposition spectrale dans la bande de fréquences couverte par le fragment de spectre associé à cet ensemble, dans lequel chaque symbole S[n] de l'ensemble associé au i-ième fragment de spectre correspond au produit $Sca(\Delta f_i)*TF(f_{li})$ où $Sca(\Delta f_i)$ est le terme de mise à l'échelle et $TF(f_{li})$ est le terme de transposition spectrale,

$$\frac{iN}{N_f} \le n < \frac{(i+1)N}{N_f}$$ et le i-ième fragment de spectre couvrant une bande de fréquences qui est délimitée par une fréquence basse $f_{li}$, une fréquence haute $f_{hi}$ et qui présente une largeur $\Delta f_i = f_{li} - f_{hi}$

$$\text{et dans lequel } Sca(\Delta f_i) = \exp\left(\frac{j2\pi(n-\frac{iN}{N_f})^2 \Delta f_i}{N f_{ech}}\right) \text{ et } TF(f_{li}) = \exp(j2\pi v_{li} n),$$

avec $f_{ech}$ la fréquence d'échantillonnage du signal numérique et $v_{li}$ la fréquence réduite $f_{li}/f_{ech}$.

2. Dispositif selon la revendication 1, dans lequel le paquet de données généré par le générateur de paquets comprend un préambule et le générateur de paquets est configuré pour insérer l'au moins une occurrence de ladite séquence en tant que séquence de synchronisation au sein du préambule.

3. Dispositif selon la revendication 2 , dans lequel le préambule porte une pluralité d'occurrences de ladite séquence en succession.

4. Dispositif selon la revendication 1 , dans lequel le générateur de paquets est configuré pour insérer l'au moins une occurrence de ladite séquence en tant que séquence pilote au sein de la charge utile.

5. Dispositif selon l'une des revendications 1 à 4, comprenant en outre un modulateur configuré pour mettre en oeuvre une modulation Turbo-FSK.

6. Dispositif de réception de données depuis un spectre de fréquences divisé en une pluralité $N_f$ de fragments de spectre couvrant chacun une bande de fréquences, les bandes de fréquences étant disjointes les unes des autres, ledit spectre de fréquences étant envoyé du dispositif selon l'une des revendications 1 à 5, ledit dispositif de réception comprenant une unité de synchronisation et une unité d'estimation de canal et étant **caractérisé en ce que** l'une au moins desdites unités est configurée pour exploiter une séquence de signalisation à enveloppe constante connue dudit dispositif, ladite séquence comprend N symboles complexes et consiste en une pluralité d'ensembles de symboles complexes chacun associé à l'un des fragments de spectre, chaque ensemble comprenant N/Nf symboles complexes et chaque symbole complexe d'un ensemble comprend un terme de mise à l'échelle de la bande de fréquences couverte par le fragment de spectre associé à cet ensemble et un terme de transposition spectrale dans la bande de fréquences couverte par le fragment de spectre associé à cet ensemble.

7. Procédé d'émission de données sur un spectre de fréquences divisé en une pluralité $N_f$ de fragments de spectre couvrant chacun une bande de fréquences, les bandes de fréquences étant disjointes les unes des autres, le procédé mettant en œuvre un dispositif selon l'une des revendications 1 à 5,
le procédé étant **caractérisé en ce qu'**il comprend la génération d'un paquet de données comprenant une charge utile et au moins une occurrence d'une séquence de signalisation à enveloppe constante, ladite séquence comprend N symboles complexes et consiste en une pluralité d'ensembles de symboles complexes chacun associé à l'un des fragments de spectre, chaque ensemble comprenant N/Nf symboles complexes et chaque symbole complexe d'un ensemble comprend un terme de mise à l'échelle de la bande de fréquences couverte par le fragment de spectre associé à cet ensemble et un terme de transposition spectrale dans la bande de fréquences couverte par le fragment de spectre associé à cet ensemble.

8. Procédé de réception de données depuis un spectre de fréquences divisé en une pluralité $N_f$ de fragments de spectre couvrant chacun une bande de fréquences, les bandes de fréquences étant disjointes les unes des autres, comprenant une étape de synchronisation et une étape d'estimation de canal, le procédé de réception mettant en oeuvre le dispositif selon la revendication 7 et étant **caractérisé en ce que** l'une au moins desdites étapes exploite une séquence de signalisation à enveloppe constante connue, ladite séquence comprend N symboles complexes et consiste en une pluralité d'ensembles de symboles complexes chacun associé à l'un des fragments de spectre, chaque ensemble comprenant N/Nf symboles complexes et chaque symbole complexe d'un ensemble comprend un terme de mise à l'échelle de la bande de fréquences couverte par le fragment de spectre associé à cet ensemble et un terme de transposition spectrale dans la bande de fréquences couverte par le fragment de spectre associé à cet ensemble.

**Patentansprüche**

1. Vorrichtung zum Senden von Daten in einem Frequenzspektrum, das in eine Vielzahl $N_f$ von Fragmenten eines Spektrums ($f_1$, $f_2$) unterteilt ist, die jeweils ein Frequenzband abdecken, wobei die Frequenzbänder voneinander getrennt sind, **dadurch gekennzeichnet, dass** sie einen Paketgenerator umfasst, der konfiguriert ist, um ein Datenpaket zu generieren, das eine Nutzlast umfasst, und mindestens ein Vorkommen einer Signalisierungssequenz mit konstanter Hüllkurve, wobei die Sequenz eine Anzahl von N komplexen Symbolen umfasst, und aus einer Vielzahl von komplexen Symboleinheiten besteht, von denen jede einem der Fragmente eines Spektrums zugeordnet ist, wobei jede Einheit N/Nf komplexe Symbole umfasst, und jedes komplexe Symbol einer Einheit einen Skalierungsbegriff des Frequenzbandes umfasst, das von dem Fragment eines Spektrums abgedeckt ist, das dieser Einheit zugeordnet ist, und einen Begriff einer spektralen Transposition in dem Frequenzband, das von dem Fragment eines Spektrums abgedeckt ist, das dieser Einheit zugeordnet ist,

wobei jedes Symbol S[n] der Einheit, das dem i. Fragment eines Spektrums zugeordnet ist, dem Produkt Sca($\Delta f_i$)*TF($f_{li}$) entspricht, wobei Sca($\Delta f_i$) der Skalierungsbegriff ist, und TF($f_{li}$) der Begriff der spektralen Transposition,

$$\frac{iN}{N_f} \leq n < \frac{(i+1)N}{N_f}$$

ist und das i. Fragment eines Spektrums, das ein Frequenzband abdeckt, das durch eine niedrige Frequenz $f_{li}$, eine hohe Frequenz $f_{hi}$ begrenzt ist, und eine Breite $\Delta f_i = f_{li} - f_{hi}$ aufweist

$$Sca(\Delta f_i) = \exp\left(\frac{j2\pi(n-\frac{iN}{N_f})^2 \Delta fi}{NfSka}\right)$$

und wobei und TF($f_{li}$) = exp(j2 $\pi v_{li}$n), mit $F_{Ska}$ als Abtastfrequenz des digitalen Signals und $v_{li}$ als reduzierte Frequenz $f_{li}/f_{Ska}$.

2. Vorrichtung nach Anspruch 1, wobei das Datenpaket, das von dem Paketgenerator generiert wird, eine Präambel umfasst, und der Paketgenerator konfiguriert ist, um mindestens ein Vorkommen der Sequenz als Synchronisationsfrequenz innerhalb der Präambel einzufügen.

3. Vorrichtung nach Anspruch 2, wobei die Präambel eine Vielzahl von Vorkommen der Sequenz in Aufeinanderfolge trägt.

4. Vorrichtung nach Anspruch 1, wobei der Paketgenerator konfiguriert ist, um mindestens ein Vorkommen der Sequenz als eine Pilotsequenz innerhalb der Nutzlast einzufügen.

5. Vorrichtung nach einem der Ansprüche 1 bis 4, weiter einen Modulator umfassend, der konfiguriert ist, um eine Turbo-FSK-Modulation umzusetzen.

6. Vorrichtung zum Empfangen von Daten aus einem Frequenzspektrum, das in eine Vielzahl $N_f$ von Fragmenten eines Spektrums unterteilt ist, die jeweils ein Frequenzband abdecken, wobei die Frequenzbänder voneinander getrennt sind, wobei das Frequenzspektrum von der Vorrichtung nach einem der Ansprüche 1 bis 5 gesendet wird, wobei die Vorrichtung zum Empfangen eine Synchronisationseinheit und eine Einheit zum Einschätzen eines Kanals umfasst, und **dadurch gekennzeichnet ist, dass** mindestens eine der Einheiten konfiguriert ist, um eine der Vorrichtung bekannte Signalisierungssequenz mit konstanter Hüllkurve auszunutzen, wobei die Sequenz N komplexe Symbole umfasst, und aus einer Vielzahl von komplexen Symboleinheiten besteht, von denen jede einem der Fragmente eines Spektrums zugeordnet ist, wobei jede Einheit N/Nf komplexe Symbole umfasst, und jedes komplexe Symbol einer Einheit einen Skalierungsbegriff des Frequenzbandes umfasst, das von dem Fragment eines Spektrums abgedeckt ist, das dieser Einheit zugeordnet ist, und einen Begriff einer spektralen Transposition in dem Frequenzband, das von dem Fragment eines Spektrums abgedeckt ist, das dieser Einheit zugeordnet ist.

7. Verfahren zum Senden von Daten in einem Frequenzspektrum, das in eine Vielzahl $N_f$ von Fragmenten eines Spektrums unterteilt ist, die jeweils ein Frequenzband abdecken, wobei die Frequenzbänder voneinander getrennt sind, wobei das Verfahren eine Vorrichtung nach einem der Ansprüche 1 bis 5 einsetzt, wobei das Verfahren **dadurch gekennzeichnet ist, dass** es das Generieren eines Datenpakets umfasst, das eine Nutzlast umfasst, und mindestens ein Vorkommen einer Signalisierungssequenz mit konstanter Hüllkurve, wobei die Sequenz N komplexe Symbole umfasst, und aus einer Vielzahl von komplexen Symboleinheiten besteht, von denen jede einem der Fragmente eines Spektrums zugeordnet ist, wobei jede Einheit N/Nf komplexe Symbole umfasst, und jedes komplexe Symbol einer Einheit einen Skalierungsbegriff des Frequenzbandes umfasst, das von dem Fragment eines Spektrums abgedeckt ist, das dieser Einheit zugeordnet ist, und einen Begriff einer spektralen Transposition in dem Frequenzband, das von dem Fragment eines Spektrums abgedeckt ist, das dieser Einheit zugeordnet ist.

8. Verfahren zum Empfangen von Daten aus einem Frequenzspektrum, das in eine Vielzahl $N_f$ von Fragmenten eines Spektrums unterteilt ist, die jeweils ein Frequenzband abdecken, wobei die Frequenzbänder voneinander getrennt sind, umfassend einen Synchronisationsschritt und einen Schritt zum Einschätzen eines Kanals, wobei das Verfahren zum Empfangen die Vorrichtung nach Anspruch 7 einsetzt, und **dadurch gekennzeichnet ist, dass** mindestens einer der Schritte eine bekannte Signalisierungssequenz mit konstanter Hüllkurve ausnutzt, wobei die Sequenz N komplexe Symbole umfasst, und aus einer Vielzahl von komplexen Symboleinheiten besteht, von denen jede einem der Fragmente eines Spektrums zugeordnet ist, wobei jede Einheit N/Nf komplexe Symbole umfasst, und jedes komplexe Symbol einer Einheit einen Skalierungsbegriff des Frequenzbandes umfasst, das von dem Fragment eines Spektrums abgedeckt ist, das dieser Einheit zugeordnet ist, und einen Begriff einer spektralen Transposition in dem Frequenzband, das von dem Fragment eines Spektrums abgedeckt ist, das dieser Einheit zugeordnet ist.

## Claims

1. Device for transmission of data on a frequency spectrum divided into a plurality $N_f$ of spectrum fragments ($f_1$, f2) each covering a frequency band, the frequency bands being discontiguous, **characterised in that** it comprises a packet generator configured to generate a data packet comprising a payload and at least one occurrence of a constant envelope signalling sequence, said sequence comprises N complex symbols and consists of a plurality of complex symbol sets each associated with one of the spectrum fragments, each set comprising $N/N_f$ complex symbols and each complex symbol of a set comprises a scaling term of the frequency band covered by the spectrum fragment associated with this set and a spectral transposition term in the frequency band covered by the spectrum fragment associated with this set,

   in which each symbol S[n] of the set associated with the i-th spectrum fragment corresponds to the product $Sca(\Delta f_i)^*TF(f_{li})$, where $Sca(\Delta f_i)$ is the scaling term and $TF(f_{li})$ is the spectral transposition term, ,

$$\frac{iN}{N_f} \leq n < \frac{(i+1)N}{N_f}$$

and the i-th spectrum fragment covers a frequency band that is delimited by a low frequency $f_{li}$, a high frequency $f_{hi}$ and has a width of $\Delta f_i = f_{li} - f_{hi}$

and wherein

$$Sca(\Delta f_i) = \exp\left(\frac{j2\pi(n-\frac{iN}{N_f})^2 \Delta f_i}{Nfech}\right) \text{ and } TF(f_{li}) = \exp(j2\pi v_{li} n),$$

with $f_{ech}$ the sampling frequency of the digital signal and $v_{li}$ the reduced frequency $f_{li} / f_{ech}$.

2. Device according to claim 1, wherein the data packet generated by the packet generator comprises a preamble and the packet generator is configured to insert the at least one occurrence of said sequence as a synchronisation sequence into the preamble.

3. Device according to claim 2, wherein the preamble carries a plurality of occurrences of said sequence in succession.

4. Device according to claim 1, wherein the packet generator is configured to insert the at least one occurrence of said sequence as a pilot sequence in the payload.

5. Device according to one of claims 1 to 4, further comprising a modulator configured to implement a Turbo-FSK modulation.

6. Device for receiving data from a frequency spectrum divided into a plurality $N_f$ of spectrum fragments each covering a frequency band, the frequency bands being discontiguous, said frequency spectrum being sent from the device according to one of claims 1 to 5, said receiving device comprising a synchronisation unit and a channel estimation unit and being **characterised in that** at least one of said units is configured to exploit a constant envelope signalling sequence known to said device, said sequence comprises N complex symbols and consists of a plurality of complex symbol sets each associated with one of the spectrum fragments, each set comprising N/Nf complex symbols and each complex symbol of a set comprises a scaling term of the frequency band covered by the spectrum fragment associated with this set and a spectral transposition term in the frequency band covered by the spectrum fragment associated with this set.

7. Method for transmission of data on a frequency spectrum divided into a plurality $N_f$ of spectrum fragments each covering a frequency band, the frequency bands being discontiguous, the method using a device according to one of claims 1 to 5,
the method being **characterised in that** it comprises generation of a data packet comprising a payload and at least one occurrence of a constant envelope signalling sequence, said sequence comprises N complex symbols and consists of a plurality of complex symbol sets each associated with one of the spectrum fragments, each set comprising N/Nf complex symbols and each complex symbol of a set comprises a scaling term of the frequency band covered by the spectrum fragment associated with this set and a spectral transposition term in the frequency band covered by the spectrum fragment associated with this set.

8. Method for receiving data from a frequency spectrum divided into a plurality of $N_f$ spectrum fragments each covering a frequency band, the frequency bands being discontiguous, comprising a synchronisation step and a channel estimation step, the receiving method using the device according to claim 7 and being **characterised in that** at least one of said steps uses a known constant envelope signalling sequence, said sequence comprises N complex symbols and consists of a plurality of complex symbol sets each associated with one of the spectrum fragments, each set comprising N/Nf complex symbols and each complex symbol of a set comprises a scaling term of the frequency band covered by the spectrum fragment associated with this set and a spectral transposition term in the frequency band covered by the spectrum fragment associated with this set.

FIG. 1

FIG. 2

FFT (dB)

FIG. 3

A

FIG. 4

FFT (dB)

FIG. 5

FIG. 6

FIG. 7

FIG. 8

FIG. 9

FIG. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **F. DEHMAS ; V. MANNONI ; V. BERG.** Turbo-FSK, a Physical Layer for LPWA: Synchronization and Channel Estimation. *2018 European Conference on Networks and Communications (EuCNC), Ljubljana, Slovenia,* 2018, 1-5

- **Y. RUI ; P. CHENG ; M. LI ; Q. T. ZHANG ; M. GUIZANI.** Carrier aggregation for lte-advanced: uplink multiple access and transmission enhancement features. *IEEE Wireless Communications,* 2013, vol. 20 (4), 101-108
- **L. BAHL ; J. COCKE ; F. JELINEK ; J. RAVIV.** Optimal decoding of linear codes for minimizing symbol error rate (corresp.). *IEEE Trans. on Information Theory,* Mars 1974, vol. 20 (2), 284-287